# EUROPEAN PATENT SPECIFICATION

(11) **EP 2 679 325 B1**
(45) Date of publication and mention of the grant of the patent: **04.03.2015**
(21) Application number: 13169749.2
(22) Date of filing: 29.05.2013
(51) Int. Cl.: B23D 49/16, B23D 59/00

(54) **Jigsaw**
Stichsäge
Scie sauteuse

(30) Priority: 26.06.2012 JP 2012143179
(43) Date of publication of application: 01.01.2014
(73) Proprietor: Makita Corporation, Anjo-shi, Aichi 446-8502 (JP)
(72) Inventor: Niwa, Kenta, Anjo-shi, Aichi 446-8502 (JP); Kani, Toshiyuki, Anjo-shi, Aichi 446-8502 (JP)
(74) Representative: Kramer Barske Schmidtchen Patentanwälte PartG mbB

(56) References cited:
- EP-A1- 0 521 263
- EP-A1- 2 455 175
- US-A- 4 090 297
- US-A1- 2009 077 814

## Description

### TECHNICAL FIELD

The present invention relates to a jigsaw according to the preamble of claim 1.

### BACKGROUND ART

Such a jigsaw is known from EP0521263A1.

For example, in the specification of US Patent Application Publication No. 2009/0077814A, there is disclosed a jigsaw including a cutting blade, a roller holder and a dust collection passage. The cutting blade protrudes downward from a front part of a housing accommodating a motor, and moves in a reciprocating manner so as to cut a workpiece when the motor is driven. The roller holder pivotally arranged under a bottom of the housing holds a roller that is arranged between a pair of side walls facing each other and that abuts on a rear part of the cutting blade. The dust collection passage formed through the housing includes a dust collection port opening behind the roller holder. In the jigsaw, chips of the workpiece are sucked into the dust collector from the dust collection port through the dust collection passage when a dust collector connected to the dust collection passage is operated.

However, in the aforementioned jigsaw, when the workpiece is cut by the cutting blade, the roller presses the rear part of the cutting blade. It is therefore inevitable to arrange the roller holder between the dust collection port and the cutting blade. Thus, the roller holder may be an obstacle to arrange the dust collection port in a position close to the cutting blade. As a result, chips are not sufficiently sucked from the dust collection port, and the efficiency of collecting chips deteriorates. Further, chips may be blown up from a cut part of the workpiece by the cutting blade.

### SUMMARY OF THE INVENTION

This invention is devised in view of the foregoing disadvantages. It is an object of the present invention to provide a jigsaw that can enhance the efficiency of collecting chips including chips blown up from a cut part of a workpiece.

A first aspect of the present invention is a jigsaw including a housing, a motor, a cutting blade, a roller holder and a dust collection passage. The housing accommodates the motor, and the cutting blade protruding downward from a front part of the housing moves in a reciprocating manner and cuts a workpiece when the motor is driven. The roller holder is pivotally arranged under the housing and holds a roller. The roller is arranged between a pair of side walls facing each other and abuts on a rear part of the cutting blade. The dust collection passage formed through the housing has a dust collection port opening behind the roller holder. The jigsaw is **characterized in that** the roller holder supports a dust collection nozzle that has a vertically long opening formed on a front face and a rear face thereof respectively, the opening on the rear face being connected to the dust collection port.

According to a second aspect of the present invention, in the configuration of the first aspect, the dust collection nozzle is arranged between the pair of the side walls.

According to a third aspect of the present invention, in the configuration of the first aspect, the dust collection nozzle is provided continuously with the pair of the side walls.

According to a fourth aspect of the present invention, in the configuration of the second aspect and the third aspect, the pair of the side walls are pivotally arranged under the housing via a pin by which the dust collection nozzle is coupled to the pair of the side walls.

In the jigsaw according to the first aspect, chips are introduced to the dust collection port from the dust collection nozzle that is attached to the roller holder located behind the cutting blade. Therefore, the efficiency of collecting chips can be enhanced. Furthermore, the vertically long opening is formed on the front face of the dust collection nozzle, whereby chips blown up from the cut part of the workpiece are likely to be introduced to the dust collection port from the vertically long opening. In consequence, it is also possible to sufficiently collect the chips blown up from the cut part.

According to the second aspect, the dust collection nozzle can be arranged between the pair of the side walls of the roller holder. Accordingly, there is no need to independently provide a space for the dust collection nozzle.

According to the third aspect, chips passing through the space between the pair of the side walls can be introduced to the dust collection port via the dust collection nozzle. Accordingly, the roller holder (the pair of the side walls) can be utilized as the dust collection passage for chips.

According to the fourth aspect, the dust collection nozzle can be easily coupled to the pair of the side walls, simply by using the pin that pivotally supports the roller holder (the pair of the side walls) under the housing.

### BRIEF DESCRIPTION OF THE DRAWINGS

FIG. 1 is a perspective view showing the internal structure of a jigsaw according to a first embodiment of the present invention.
FIG. 2 is a side sectional view of the jigsaw according to the first embodiment of the present invention.
FIG. 3 is a front view of the jigsaw according to the first embodiment of the present invention.
FIG. 4A is a perspective view of a dust collection nozzle according to the first embodiment of the present invention.
FIG. 4B is a side view of the dust collection nozzle according to the first embodiment of the present invention.
FIG. 4C is a front view of the dust collection nozzle according to the first embodiment of the present invention.
FIG. 5A is a perspective view of a dust collection nozzle according to a second embodiment of the present invention.
FIG. 5B is a side view of the dust collection nozzle according to the second embodiment of the present invention.
FIG. 5C is a front view of the dust collection nozzle according to the second embodiment of the present invention.
FIG. 6 is a side sectional view of the jigsaw according to the second embodiment of the present invention.
FIG. 7 is a front view of the jigsaw according to the second embodiment of the present invention.

### DETAILED DESCRIPTION OF EMBODIMENTS

### <First Embodiment>

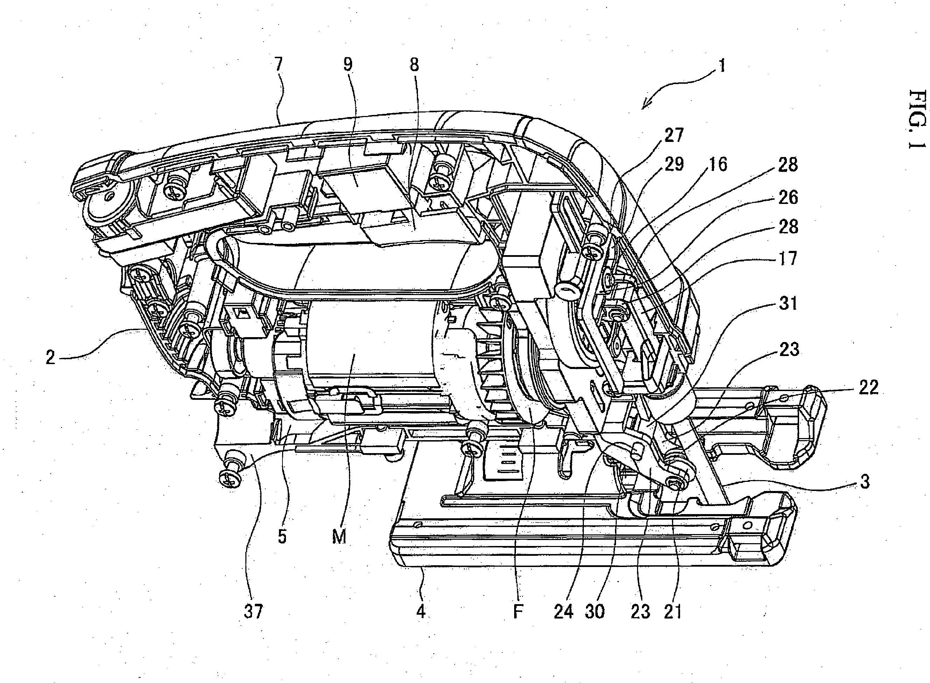

A first embodiment of the present invention will be described with reference to FIGS. 1 to 4. As shown in FIGS. 1 to 3, a jigsaw 1 includes a housing 2, a blade 3, a base 4, and a dust collection passage 5.

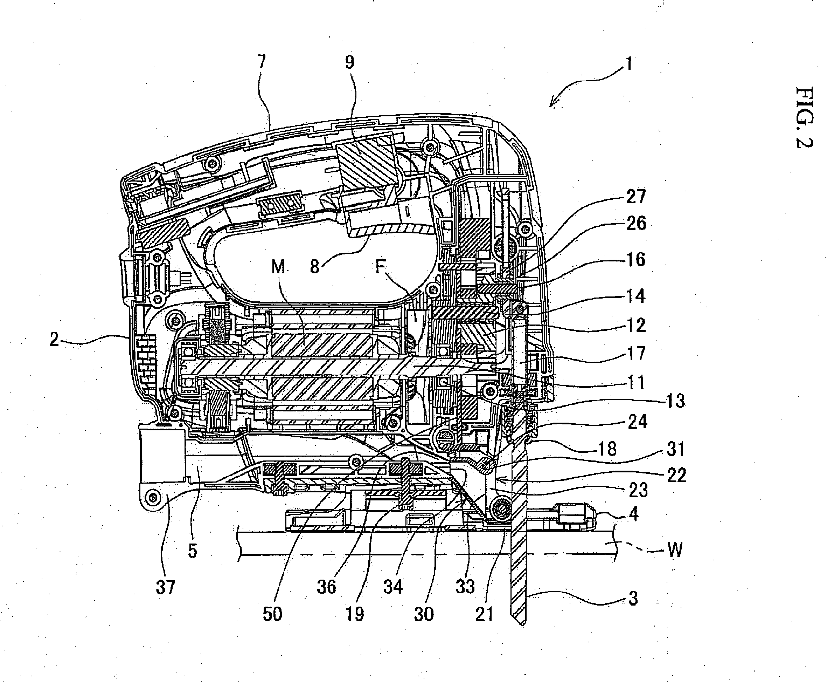

The housing 2 is made of resin, and a handle 7 is provided on an upper portion of the housing 2 (on an upper side in FIGS. 1 to 3). As shown in FIGS. 1 and 2, the handle 7 accommodates a switch 9 having a trigger 8 for operating or stopping a motor M. The motor M is accommodated at a central portion of the housing 2, and a reciprocating mechanism is accommodated in a front portion of the housing 2 (on the right side in FIGS. 1 and 2). A cooling fan F of the motor M is attached to an output shaft 11 of the motor M. In addition, a drive gear 12 of the reciprocating mechanism is meshed with the output shaft 11. The output shaft 11 is rotatably supported by a bearing 13 (see FIG. 2) attached to the inside of the housing 2. Besides, the drive gear 12 is supported rotatably with respect to a shaft portion 14 fixed in the housing 2. A spindle 16 is fixed to an eccentric position on a front face of the drive gear 12 (on the right side in FIG. 2). A cylindrical roller 26 is rotatably supported by the spindle 16. Furthermore, in the front portion of the housing 2, a rod 17 is pivotally supported by a pair of left and right rod support portions 28 and 28 protruding forward from a slider 27. In addition, the roller 26 is inserted in a laterally long guide groove portion 29 (see FIG. 1) that is provided in the slider 27. Due to rotation of the drive gear 12, the spindle 16 revolves around the shaft portion 14. At this moment, the roller 26 inserted in the guide groove portion 29 of the slider 27 vertically moves the slider 27 in a reciprocating manner. As a result, the rod 17 pivotally supported by the rod support portions 28 and 28 of the slider 27 vertically moves in a reciprocating manner. A lower end of the rod 17 protrudes from a lower face of a front portion of the housing 2. A blade attachment portion 18 is provided at the lower end of the rod 17. Furthermore, a pressing plate 50 (see FIG. 2) is accommodated in the front portion of the housing 2. The pressing plate 50 vertically moves in accordance with rotation of the drive gear 12, and presses down an upper face of a later-described roller holder 22.

As shown in FIG. 2, the blade 3 assumes a rectilinear shape, and an upper portion of the blade 3 is fixed to the blade attachment portion 18 by insertion. The blade 3 protrudes downward from the blade attachment portion 18 as a continuation of the blade attachment portion 18. It should be noted that the blade 3 is an example of the cutting blade of the present invention. Besides, a base fixation bolt 19 is tightened on a lower face of the housing 2 so that the base 4 is attached to the lower face. As shown in FIG. 2, the base 4 is used to abut an upper face of a workpiece W.

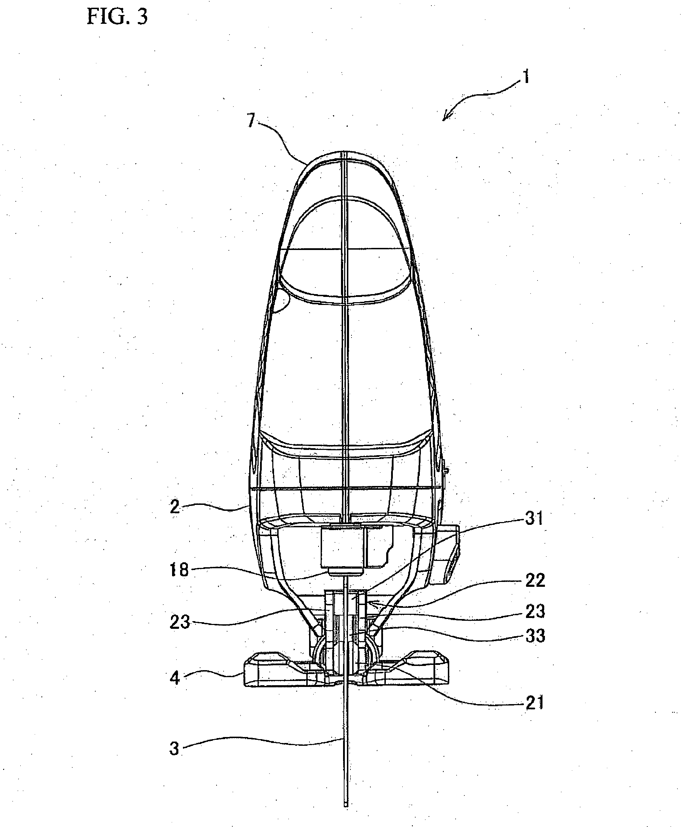

As shown in FIGS. 1 and 2, a roller holder 22 is arranged under the housing 2 and moves in a pivotal manner, as described below. The roller holder 22 holds a roller 21 abutting on the rear part of the blade 3. As shown in FIGS. 1 and 3, the roller holder 22 has a pair of left and right side wall portions 23 and 23 extending downward from left and right ends of a flat upper face of the roller holder 22. An upper end of each side wall portion 23 is pivotally attached to a pivotal support portion (not shown) by a pin 24 (see FIGS. 1 and 2). The pivotal support portion extends downward from the lower face of the housing 2. Furthermore, a lower end of each side wall portion 23 is bent forward (rightward in FIGS. 1 and 2), and the roller 21 is pivotally attached between the lower ends of both the side wall portions 23 and 23. The pin 24 is not shown in FIG. 3.

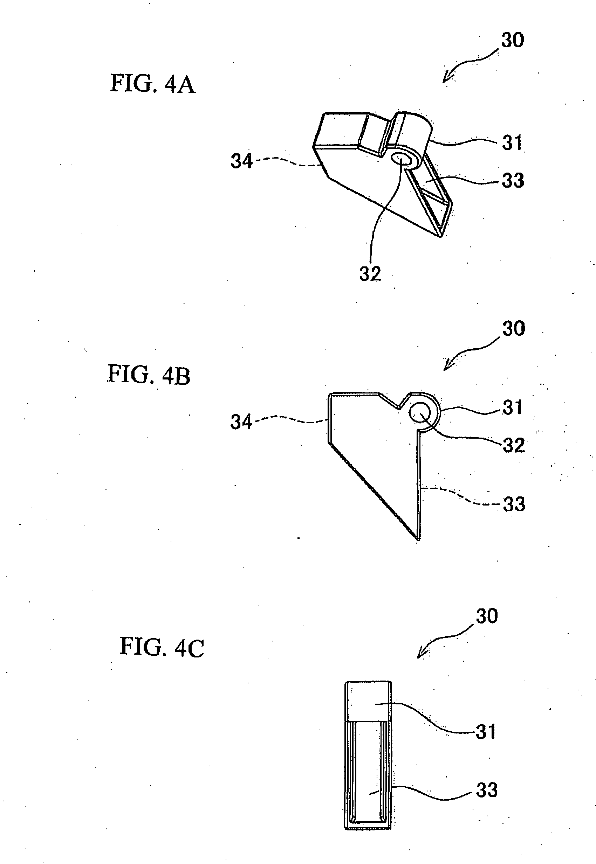

In addition, a dust collection nozzle 30 shown in FIG. 4 is attached to the roller holder 22. In FIGS. 1 to 3, there is shown an example in which the dust collection nozzle 30 is arranged between the pair of the side wall portions 23 and 23. A rear part of the dust collection nozzle 30 is uncovered by the side wall portions 23 and 23 so as to protrude rearward of the pair of the side wall portions 23 and 23. The dust collection nozzle 30 is made of resin and configured as a hollow box, and a bottom face of the dust collection nozzle 30 is formed so as to be inclined upward from a front part of the dust collection nozzle 30 toward the rear part of the dust collection nozzle 30, as shown in FIG. 4B. Furthermore, a protrusion portion 31 that substantially semicircularly protrudes forward as viewed from side is formed at an upper front end of the dust collection nozzle 30 as shown in FIG. 2. The protrusion portion 31 has a through-hole 32 passing through the protrusion portion 31 in a lateral direction (a left and right direction in a frontal view of the jigsaw 1). The aforementioned pin 24 can be inserted through the through-hole 32. Besides, as shown in FIGS. 4A and 4C, a vertically long and rectangular opening 33 is formed on the front face of the dust collection nozzle 30. Further, a rectangular opening 34 is formed on the rear face of the dust collection nozzle 30. The vertical length of the opening 34 is shorter than that of the opening 33. As shown in FIGS. 1 and 2, the dust collection nozzle 30 is inserted in a space between the pair of the side wall portions 23 and 23 and coupled to the pair of the side wall portions 23 and 23 by the pin 24 that is inserted through the through-hole 32.

On the other hand, as shown in FIG. 2, the dust collection passage 5 is provided so as to pass through the housing 2 in an axial direction of the output shaft 11 (a front- rear direction in FIGS. 1 and 2) and to form a hollow long passage in the lower portion of the housing 2. A dust collection port 36 opens at a front end of the dust collection passage 5, behind the roller holder 22. The dust collection port 36 is joined to the dust collection nozzle 30 attached to the roller holder 22 such that the dust collection port 36 communicates with the opening 34. In addition, a dust collection hose connection portion 37 opens on the rear face of the housing 2 that constitutes a rear end of the dust collection passage 5.

Next, the operation of the jigsaw 1 will be described. When the switch 9 is turned on by being pressed the trigger 8 into the handle 7, the motor M starts to be driven. When the drive gear 12 rotates as a result, the blade 3 vertically moves in a reciprocating manner together with the rod 17, thereby cutting the workpiece W While the pressing plate 50 also vertically moves in accordance with rotation of the drive gear 12, the roller holder 22 swings frontward and rearward around the pin 24 together with the dust collection nozzle 30. Thus, the roller 21 presses the rear part of the blade 3 according as the blade 3 ascends. In addition, when the cooling fan F rotates in accordance with the driving of the motor M, cooling air for the motor M is sucked into the housing 2 from a suction port (not shown) of the housing 2, and cools the motor M. When the workpiece W is cut by the blade 3, a dust collector (not shown) is connected in advance to the dust collection hose connection portion 37 via a dust collection hose (not shown). During operation of the dust collector, chips generated from a cut part of the workpiece W are sucked from the opening 33 formed on the front face of the dust collection nozzle 30. The chips sequentially pass through the opening 34 formed on the rear face of the dust collection nozzle 30, the dust collection port 36, the dust collection passage 5 and the dust collection hose so that the dust collector collects the chips. In the present embodiment, the dust collection nozzle 30 joined to the dust collection port 36 is attached to the roller holder 22 located behind the blade 3, so that chips can be effectively introduced to the dust collection port 36. In addition, since the opening 33 of the dust collection nozzle 30 is formed to be vertically long, chips blown up from the cut part of the workpiece W are likely to enter the dust collection nozzle 30 from the opening 33. As a result, the blown-up chips are likely to be introduced to the dust collection port 36 through the dust collection nozzle 30.

### <Effect of First Embodiment>

In the jigsaw 1 according to the present embodiment, chips can be introduced to the dust collection port 36 from the dust collection nozzle 30 that is attached to the roller holder 22 located behind the blade 3. Therefore, the efficiency of collecting chips can be enhanced. Furthermore, since the vertically long opening 33 is formed on the front face of the dust collection nozzle 30, the chips blown up from the cut part of the workpiece W are likely to be introduced to the dust collection port 36 from the vertically long opening 33. In consequence, it is also possible to sufficiently collect the chips blown up from the cut part.

Besides, the dust collection nozzle 30 can be arranged in the space between the pair of the side wall portions 23 and 23 so that there is no need to independently provide a space for arranging the dust collection nozzle 30.

Furthermore, the dust collection nozzle 30 can be easily coupled to the pair of the side wall portions 23 and 23, simply by using the pin 24 that pivotally supports the roller holder 22 (the pair of the side wall portions 23 and 23) under the housing 2.

### <Second Embodiment>

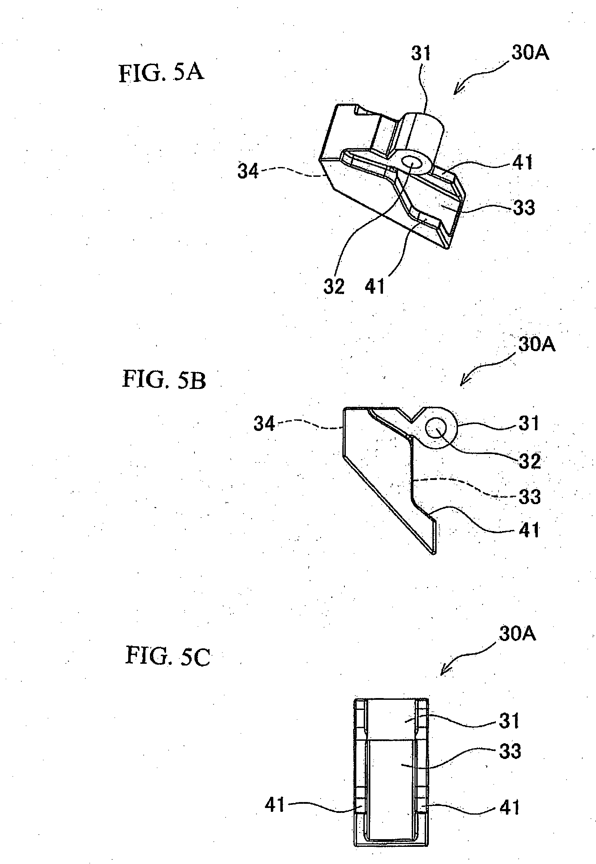

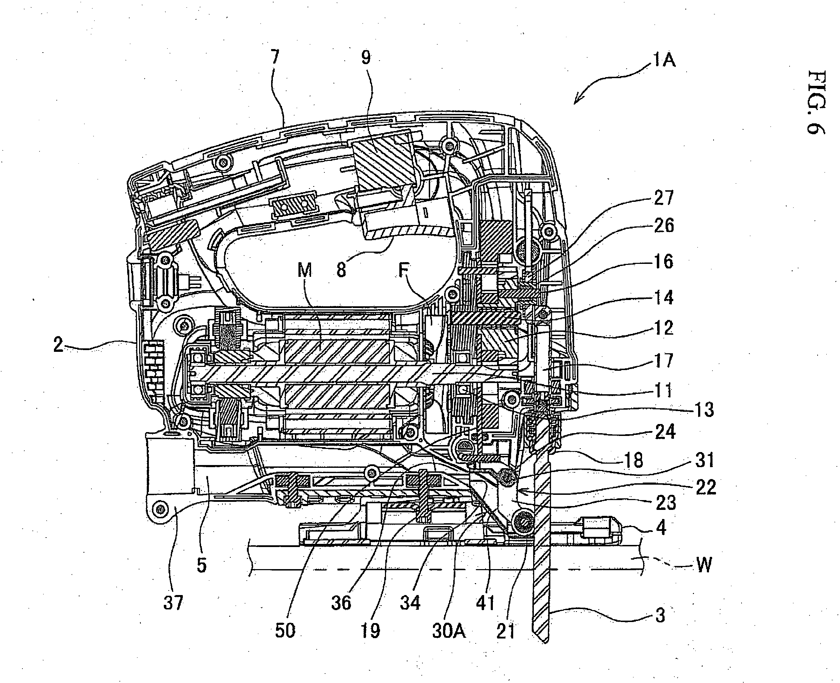

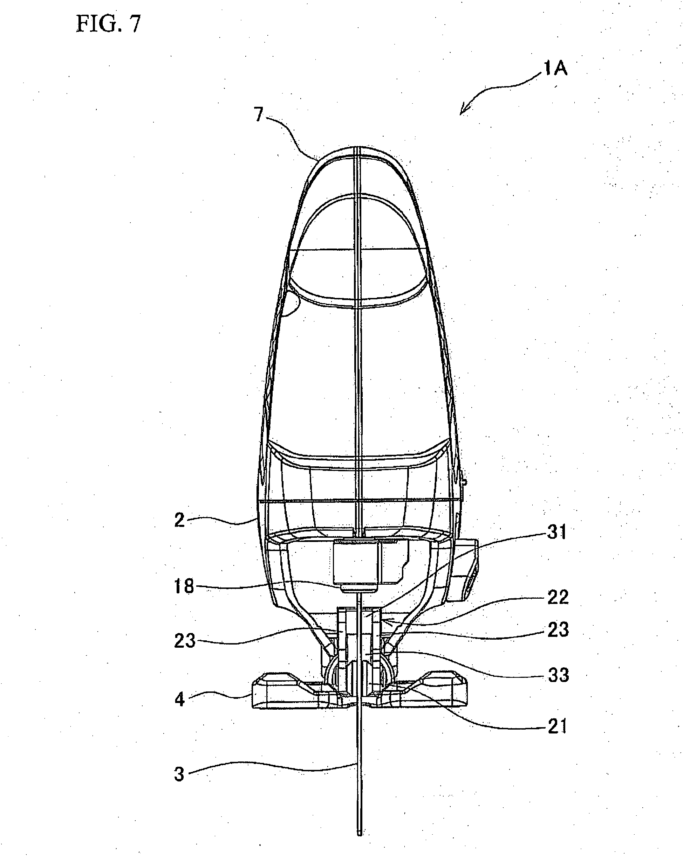

A second embodiment of the present invention will be described with reference to FIGS. 5 to 7. In the second embodiment, components identical to those of the first embodiment are denoted by the same reference symbols, and the description thereof will be simplified. In the second embodiment, a dust collection nozzle 30A shown in FIG. 5 is attached to the roller holder 22 of a jigsaw 1A. In FIGS. 6 and 7, there is shown an example in which the dust collection nozzle 30A is arranged behind the roller holder 22 continuously with the pair of the side wall portions 23 and 23. As shown in FIG. 5B, the dust collection nozzle 30A is made of resin and configured as a hollow box whose bottom face is inclined upward, as is the case with the dust collection nozzle 30 according to the first embodiment. As shown in FIGS. 5A and 5B, notch portions 41 to which rear parts of the side wall portions 23 are fitted are provided in both left and right side faces of the dust collection nozzle 30A so that the rear parts of the side wall portions 23 and 23 are arranged continuously with the front face of the dust collection nozzle 30A. In addition, the openings 33 and 34 are formed on the dust collection nozzle 30A as is the case with the dust collection nozzle 30 according to the first embodiment. As shown in FIGS. 6 and 7, the opening 34 is joined to the dust collection port 36, and the rear side edges of the side wall portions 23 and 23 are fitted to the notch portions 41 and 41 of the dust collection nozzle 30A from ahead, whereby the dust collection nozzle 30A can be arranged continuously with the pair of the side wall portions 23 and 23 in the axial direction of the output shaft 11 (the front-rear direction in FIG. 6). It should be noted that, as is the case with the first embodiment, the dust collection nozzle 30A is coupled to the pair of the side wall portions 23 and 23 by the pin 24 inserted through the through-hole 32.

Next, the operation of the jigsaw 1A will be described. By operating the dust collector in the same manner as in the first embodiment, chips are sucked from the opening 33 of the dust collection nozzle 30A after passing through the space between the pair of the side wall portions 23 and 23. The chips sequentially pass through the opening 34 of the dust collection nozzle 30A, the dust collection port 36, the dust collection passage 5 and the dust collection hose so that the dust collector collects the chips. In the present embodiment, since the pair of the side wall portions 23 and 23 and the dust collection nozzle 30A are continuously arranged in the axial direction of the output shaft 11 as shown in FIG. 6, chips can sequentially pass through the space between the pair of the side wall portions 23 and 23. Thus, the dust collection nozzle 30A is effectively introduced to the dust collection port 36, together with suction airflow of the dust collector.

### <Effect of Second Embodiment>

In the jigsaw 1A according to the present embodiment, the chips that pass through the space between the pair of the side wall portions 23 and 23 can be introduced to the dust collection port 36 via the dust collection nozzle 30A. Accordingly, the roller holder 22 (the side wall portions 23 and 23) can be utilized as the dust collection passage for chips. In addition, since the dust collection nozzle 30A is arranged continuously with the pair of the side wall portions 23 and 23 in the axial direction of the output shaft 11, the width dimension (in a left-right direction in a frontal view of the jigsaw 1A) of the opening 33 of the dust collection nozzle 30A can be made larger than the lateral width dimension of the opening 33 of the dust collection nozzle 30, in comparison with the case where the dust collection nozzle 30 is arranged between the pair of the side wall portions 23 and 23 as in the first embodiment. In consequence, the chips sucked into the dust collection nozzle 30A from the opening 33 flow smoothly.

The present invention is not limited to the foregoing embodiments, but can be carried out with part of the configuration thereof appropriately modified without departing from the scope of the present invention. In each of the foregoing embodiments, the dust collection nozzle 30 or 30A is configured as a hollow box that is separate from the roller holder 22 and has the bottom face that is inclined upward from the front part of the dust collection nozzle 30 or 30A toward the rear part of the dust collection nozzle 30 or 30A, but the present invention is not limited to this configuration. For example, the shape of the dust collection nozzle can be changed into an appropriate shape that allows the dust collection nozzle to be arranged between the pair of the side wall portions 23 and 23, or into an appropriate shape that allows the dust collection nozzle to be arranged continuously with the pair of the side wall portions 23 and 23. In this manner, the dust collection nozzle can be configured separately from the roller holder 22, and can be appropriately changed in shape. Therefore, the degree of freedom in selecting the shape of the dust collection nozzle can be enhanced. Besides, although the dust collection nozzle 30 or 30A is made from resin in each of the foregoing embodiments of the present invention, the present invention is not limited to this configuration. The dust collection nozzle 30 or 30A may also be made from metal or rubber.

## Claims

1. A jigsaw (1) in which a housing (2) accommodates a motor (M), a cutting blade (3) driven by the motor (M) protrudes downward from a front part of the housing (2) and moves in a reciprocating manner so as to cut a workpiece (W), a roller holder (22) that is pivotally arranged under the housing (2) and holds a roller (21) that abuts on a rear part of the cutting blade (3) and is arranged between a pair of side walls (23, 23) facing each other, and a dust collection passage (5) is formed on the housing (2) and has a dust collection port (36) that opens behind the roller holder (22), the jigsaw (1) **characterized in that**
the roller holder (22) supports a dust collection nozzle (30) that has a vertical long opening (33, 34) formed on a front face and on a rear face thereof respectively, the opening (34) on the rear face being connected to the dust collection port (36).

2. The jigsaw (1) according to claim 1, wherein the dust collection nozzle (30) is arranged between the pair of the side walls (23, 23).

3. The jigsaw (1) according to claim 1, wherein the dust collection nozzle (30) is provided continuously with the pair of the side walls (23, 23).

4. The jigsaw according to claim 3, wherein notch portions (41) to which rear parts of the side (23, 23) are fitted are provided in both left and right side faces of the dust collection nozzle (30) respectively, continuously with the front face of the dust collection nozzle (30).

5. The jigsaw (1) according to claim 2, 3 or 4, wherein the pair of the side walls (23, 23) are pivotally arranged under the housing (2) by a pin (24), and
the dust collection nozzle (30) is coupled to the pair of the side walls (23, 23) by the pin (24).

6. The jigsaw (1) according to any one of claims 1 to 5, wherein the dust collection nozzle (30) is configured as a hollow box,
the opening (34) on the rear face of the dust collection nozzle (30) has a shorter vertical length than the opening (33) on the front face,
a bottom face of the dust collection nozzle (30) is formed so as to be inclined upward from the front face toward the rear face, and
the dust collection port (36) is connected to the opening (34) on the rear face of the dust collection nozzle (30).

7. The jigsaw (1) according to claim 6, wherein a protrusion portion (31) is formed at an upper front end of the dust collection nozzle (30) and substantially semicircularly protrudes frontward in a side view of the dust collection nozzle (30),
a through-hole (32) is provided through which the pin (24) is inserted to pass through the protrusion portion (31) in a right and left direction in a frontal view of the jigsaw (1), and
the dust collection nozzle (30) is coupled to the pair of the side walls (23, 23) by the pin (24) inserted through the through-hole (32).

8. The jigsaw (1) according to any one of claims 1 to 7, wherein the dust collection passage (5) is provided so as to pass through the housing (2) in an axial direction of an output shaft (11) and to form a long hollow passage in the housing (2), and
a connection portion (37) for a dust collection hose that is joined to a dust collector is opened through the rear face of the housing (2) that constitutes a rear end of the dust collection passage (5).

## Patentansprüche

1. Stichsäge (1), in welcher ein Gehäuse (2) einen Motor (M) aufnimmt, ein Schneideblatt (3), das durch den Motor (M) angetrieben wird, von einem vorderen Teil des Gehäuses (2) nach unten vorsteht und sich zum Schneiden eines Werkstücks (W) in einer hin und her gehenden Art und Weise bewegt, ein Rollenhalter (22), der unterhalb des Gehäuses (2) drehbar angeordnet ist und eine Rolle (21) hält, die gegen einen hinteren Teil des Schneideblattes (3) stößt und zwischen einem Paar von Seitenwänden (23, 23), die einander gegenüber liegen, angeordnet ist, und eine Staubsammelpassage (5) an dem Gehäuse (2) ausgebildet ist, die eine Staubsammelöffnung (36) aufweist, die sich hinter dem Rollenhalter (22) öffnet, wobei die Stichsäge (1) **dadurch gekennzeichnet ist, dass**
der Rollenhalter (22) einen Staubsammelstutzen (30) lagert, der eine vertikale längliche Öffnung (33, 34) aufweist, die an einer vorderen Fläche und einer hinteren Fläche davon jeweils ausgebildet ist, wobei die Öffnung (34) an der hinteren Fläche mit der Staubsammelöffnung (36) verbunden ist.

2. Stichsäge (1) nach Anspruch 1, bei der der Staubsammelstutzen (30) zwischen dem Paar der Seitenwände (23, 23) angeordnet ist.

3. Stichsäge (1) nach Anspruch 1, bei der der Staubsammelstutzen (30) durchgängig mit dem Paar der Seitenwände (23, 23) vorgesehen ist.

4. Stichsäge nach Anspruch 3, bei der Aussparungsteile (41), in welche rückwärtige Teile der Seiten (23, 23) eingepasst werden, in sowohl einer linken als auch einer rechten Fläche des Staubsammelstutzens durchgängig mit der vorderen Fläche des Staubsammelstutzens (30) vorgesehen sind.

5. Stichsäge (1) nach Anspruch 2, 3 oder 4, bei der das Paar der Seitenwände (23,23) unter dem Gehäuse (2) durch einen Pin (24) drehbar angeordnet sind, und
der Staubsammelstutzen (30) an das Paar der Seitenwände (23, 23) durch den Pin (24) gekoppelt ist.

6. Stichsäge (1) nach einem der Ansprüche 1 bis 5, bei der der Staubsammelstutzen als eine hohle Box konfiguriert ist,
die Öffnung (34) an der hinteren Fläche des Staubsammelstutzens (30) eine kürzere vertikale Länge als die Öffnung (33) an der vorderen Fläche aufweist,
eine Bodenfläche des Staubsammelstutzens (30) so geformt ist, dass sie von der vorderen Fläche in Richtung der hinteren Fläche nach oben geneigt ist, und
die Staubsammelöffnung (36) mit der Öffnung (34) an der hinteren Fläche des Staubsammelstutzens (30) verbunden ist.

7. Stichsäge (1) nach Anspruch 6, bei der ein Vorsprungsteil (31) an einem oberen vorderen Ende des Staubsammelstutzens (30) ausgebildet ist und im Wesentlichen halbkreisförmig nach vorne in einer Seitenansicht des Staubsammelstutzens (30) vorsteht,
ein Durchgangsloch (32), durch welches der Pin (24) zum Passieren durch den Vorsprungsteil (31) in einer Rechts-Links-Richtung in einer frontalen Ansicht der Stichsäge (1) eingeführt wird, vorgesehen ist, und
der Staubsammelstutzen (30) durch den Pin (24), der durch das Durchgangsloch (32) eingeführt ist, mit dem Paar der Seitenwände (23, 23) gekoppelt ist.

8. Stichsäge (1) nach einem der Ansprüche 1 bis 7, bei der die Staubsammelpassage (5) so vorgesehen ist, dass sie durch das Gehäuse (2) in einer axialen Richtung einer Ausgabewelle (11) passiert und eine längliche hohle Passage in dem Gehäuse (2) ausbildet, und
ein Verbindungsteil (37) für einen Staubsammelschlauch, der mit einem Staubsammler verbunden ist, durch die hintere Fläche des Gehäuses (2), die ein hinteres Ende der Staubsammelpassage (5) bildet, offen ist.

## Revendications

1. Scie sauteuse (1), dans laquelle un boîtier (2) loge un moteur (M), une lame de coupe (3) entraînée par le moteur (M) fait saillie vers le bas d'une partie avant du boîtier (2) et se déplace dans un mouvement alternatif de sorte à couper une pièce à usiner (W), un porte-rouleau (22) qui est agencé de manière pivotante sous le boîtier (2) et maintient un rouleau (21) qui bute contre une partie arrière de la lame de coupe (3) et est agencé entre une paire de parois latérales (23, 23) se faisant face l'une à l'autre et un passage de collecte de poussière (5) est formé sur le boîtier (2) et présente un orifice de collecte de poussière (36) qui s'ouvre derrière le porte-rouleau (22), la scie sauteuse (1) étant **caractérisée en ce que**
le porte-rouleau (22) supporte une buse de collecte de poussière (30) qui présente une longue ouverture verticale (33, 34) formée sur une face avant et sur une face arrière de celle-ci respectivement, l'ouverture (34) sur la face arrière étant reliée à l'orifice de collecte de poussière (36).

2. Scie sauteuse (1) selon la revendication 1, dans laquelle la buse de collecte de poussière (30) est agencée entre la paire de parois latérales (23, 23).

3. Scie sauteuse (1) selon la revendication 1, dans laquelle la buse de collecte de poussière (30) est dotée en continu de la paire de parois latérales (23, 23).

4. Scie sauteuse selon la revendication 3, dans laquelle des parties d'encoche (41), auxquelles des parties arrière du côté (23, 23) sont fixées, sont dotées respectivement à la fois dans les faces latérales gauche et droite de la buse de collecte de poussière (30), en continu de la face avant de la buse de collecte de poussière (30).

5. Scie sauteuse (1) selon la revendication 2, 3 ou 4, dans laquelle la paire de parois latérales (23, 23) est agencée de manière pivotante sous le boîtier (2) par une broche (24) et
la buse de collecte de poussière (30) est couplée à la paire de parois latérales (23, 23) par la broche (24).

6. Scie sauteuse (1) selon l'une quelconque des revendications 1 à 5, dans laquelle la buse de collecte de poussière (30) est configurée comme une boîte creuse,
l'ouverture (34) sur la face arrière de la buse de collecte de poussière (30) présente une longueur verticale plus courte que l'ouverture (33) sur la face avant,
une face inférieure de la buse de collecte de poussière (30) est formée de sorte à être inclinée vers le haut depuis la face avant vers la face arrière et
l'orifice de collecte de poussière (36) est relié à l'ouverture (34) sur la face arrière de la buse de collecte de poussière (30).

7. Scie sauteuse (1) selon la revendication 6, dans laquelle une partie en saillie (31) est formée sur une extrémité avant supérieure de la buse de collecte de poussière (30) et fait saillie de manière sensiblement semi-circulaire vers l'avant dans une vue de côté de la buse de collecte de poussière (30),
un trou débouchant (32) est prévu, par lequel la broche (24) est insérée pour traverser la partie en saillie (31) à droite et à gauche dans une vue de face de la scie sauteuse (1), et
la buse de collecte de poussière (30) est couplée à la paire de parois latérales (23, 23) par la broche (24) insérée dans le trou débouchant (32).

8. Scie sauteuse (1) selon l'une quelconque des revendications 1 à 7, dans laquelle le passage de collecte de poussière (5) est prévu de sorte à traverser le boîtier (2) dans une direction axiale d'un arbre de sortie (11) et à former un long passage creux dans le boîtier (2) et
une partie de liaison (37) pour un tuyau de collecte de poussière qui est joint à un collecteur de poussière, est ouverte dans la face arrière du boîtier (2) qui constitue une extrémité arrière du passage de collecte de poussière (5).
